# FASCICULE DE BREVET EUROPEEN

(11) **EP 1 307 994 B1**
(45) Date de publication et mention de la délivrance du brevet: **30.06.2004**
(21) Numéro de dépôt: 01956610.8
(22) Date de dépôt: 19.07.2001
(51) Int. Cl.: H04L 9/08, H04M 1/727

(54) **PROCEDE DE RECONNAISSANCE SECURISEE ENTRE DEUX APPAREILS D'UN RESEAU RADIOFREQUENCE**
VERFAHREN ZUR GESICHERTEN ERKENNUNG ZWISCHEN ZWEI GERÄTEN EINES FUNKFREQUENZNETZES
SECURE IDENTIFICATION METHOD BETWEEN TWO RADIOFREQUENCY NETWORK APPLIANCES

(30) Priorité: 26.07.2000 FR 0009774
(43) Date de publication de la demande: 07.05.2003
(73) Titulaire: Gemplus, 13881 Gémenos Cedex (FR)
(72) Inventeur: ARNOUX, Christophe, F-04220 CORBIERES (FR)
(86) Numéro de dépôt international: PCT/FR2001/002353
(87) Numéro de publication internationale: WO 2002/009345

(56) Documents cités:
- GB-A- 2 254 225
- US-A- 5 581 598
- "Specification of the Bluetooth System; Wireless connections made easy; Profiles; v1.0B" , [en ligne] 1 décembre 1999 (1999-12-01), page 1, 13-60, 190-218 XP002167007 Extrait de l'Internet: <URL:http://www.bluetooth.com/developer/sp ecification/profiles_10_b.pdf> [extrait le 2001-02-01]

## Description

L'invention concerne les réseaux radiofréquence dans lesquels les appareils du réseau communiquent entre eux par des liaisons radiofréquence et, plus particulièrement, dans de tels réseaux un procédé permettant à deux appareils du réseau de se reconnaître et de communiquer ensuite de manière sécurisée.

Il est connu de réaliser des liaisons radiofréquence entre des appareils électroniques tels qu'un ordinateur personnel, une imprimante, un combiné téléphonique portable ou fixe, etc, en mettant en oeuvre, par exemple, les spécifications d'un réseau appelé "BLUETOOTH" définies dans les documents ETS 300-328 et ETS 300-339.

Dans un tel réseau BLUETOOTH, les appareils ont chacun une adresse qui permet de les identifier mais cette adresse est transmise en clair dans les signaux radiofréquence. Il en résulte que les liaisons radiofréquence ne sont pas sécurisées.

Pour pallier ce problème, il est proposé de rentrer dans chacun des deux appareils à connecter un code identique secret qui permettra par la suite de générer des clés de sessions pour l'authentification et le cryptage.

Dans le document « Specification of the Bluetooth System; Wireless connections made easy; Profiles »; v1.0 B; 1 décembre 1999 il est décrit comment le procédé de appariement (pairing en terme Anglaise) se fait entre deux appareils utilisant le standard « Bluetooth ».

Cette procédure peut s'avérer fastidieuse dans la mesure où il faut saisir deux fois ce code sur un clavier, code qui peut avoir de nombreux chiffres ou lettres.

Par ailleurs, certains appareils du réseau peuvent ne pas avoir de clavier, par exemple une oreillette d'écoute d'un appareil portable téléphonique, de sorte que l'on est amené à enregistrer ce code de manière permanente ou presque dans l'appareil sans clavier. Ceci conduit à permettre à tout porteur de l'appareil de s'introduire dans le réseau sans avoir à s'authentifier en tant que personne.

Il est aussi proposé de connecter les deux appareils par l'intermédiaire d'une liaison filaire de manière à échanger en toute sécurité les clés de session pour assurer ensuite l'authentification et le cryptage.

L'inconvénient de cette solution réside dans le fait que chaque appareil doit être équipé d'une prise spéciale qui sera différente d'un appareil à un autre.

Un but de la présente invention est donc de mettre en oeuvre un procédé de reconnaissance entre deux appareils d'un réseau radiofréquence qui permet de réaliser une reconnaissance sécurisée des deux appareils. L'invention concerne donc un procédé de reconnaissance sécurisée entre deux appareils d'un réseau radiofréquence, caractérisé en ce qu'il comprend les étapes suivantes consistant à :
(a) mettre en marche les deux appareils,
(b) sélectionner l'un des deux appareils comme appareil-maître et l'autre comme appareil-esclave,
(c) approcher les deux appareils à proximité immédiate l'un de l'autre,
(d) lancer sur l' appareil-maître une procédure automatique de reconnaissance sécurisée consistant à :
   (d1) émettre des signaux selon un diagramme de rayonnement tel que les signaux ne soient reçus que par l'appareil-esclave,
   (d2) lancer une procédure classique de connexion au réseau radiofréquence et, en cas de succès de connexion au réseau radiofréquence,
   (d3) générer une clé de reconnaissance en vue de sécuriser les échanges ultérieurs,
   (d4) émettre à nouveau des signaux selon le diagramme de rayonnement habituel, et
(e) éloigner les deux appareils l'un de l'autre pour un fonctionnement à distance normale.

Les étapes (d1) et (d2) sont répétées en cas d'échec de l'étape (d2) de connexion au réseau radiofréquence. Les étapes (d1) et (d2) sont répétées au moins une fois avec un diagramme de rayonnement de portée plus grande.

L'augmentation de la portée est obtenue en modifiant notamment la puissance d'émission de l'appreil-maître.

L'invention concerne aussi un appareil-maître pour mettre en oeuvre le procédé selon l'invention et comprenant un émetteur-récepteur connecté à une antenne d'émission-réception de manière à réaliser un dispositif d'émission-réception, caractérisé en ce que le dispositif d'émission-réception comprend des moyens pour modifier la portée du diagramme de rayonnement de l'antenne de manière à présenter une première portée correspondant à un fonctionnement normal et au moins une deuxième portée plus petite que la première pour mettre en oeuvre le procédé selon l'invention.

D'autres caractéristiques et avantages de la présente invention apparaîtront à la lecture de la description suivante d'un exemple particulier de réalisation, ladite description étant faite en relation avec les dessins joints dans lesquels :
- la figure 1 montre deux appareils d'un réseau radiofréquence à connecter de manière sécurisée,
- la figure 2 montre les appareils de la figure 1 en procédure de reconnaissance sécurisée selon l'invention,
- la figure 3 est un schéma simplifié d'une antenne d'appareil-maître dont la puissance d'émission est modulée, et
- la figure 4 est un schéma montrant une antenne d'appareil-maître dont la directivité présente une direction privilégiée d'émission.

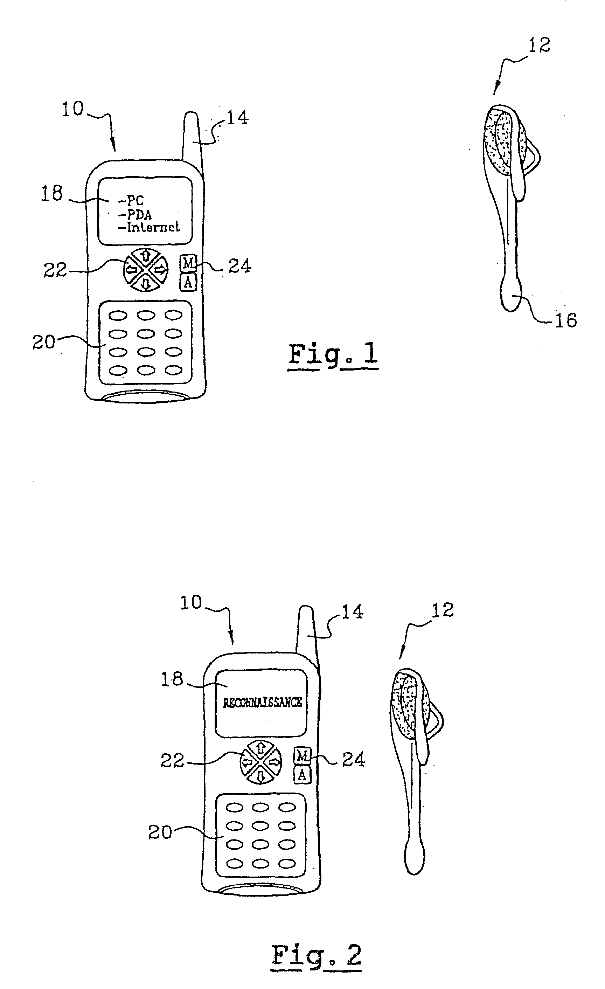

L'invention sera décrite dans la mise en place d'une connexion radiofréquence entre un appareil portable téléphonique 10 et une oreillette d'écoute 12 (figure 1), cette connexion radiofréquence étant réalisée selon les spécifications du système précité BLUETOOTH.

Les appareils d'un réseau BLUETOOTH sont équipés chacun d'une antenne radiofréquence, référencée 14 pour l'appareil téléphonique 10 et 16 pour l'oreillette d'écoute 12.

Les deux appareils 10 et 12 étant à connecter ensemble, la première étape du procédé selon l'invention consiste à :
(a) mettre en marche par un bouton les appareils 10 (bouton 24) et 12 ; cette mise en marche aura notamment pour effet de mettre en fonctionnement l'émetteur-récepteur de chaque appareil et d'activer certaines fonctions comme l'affichage sur un écran 18 et un clavier 20 de l'appareil téléphonique 10.
   Cet écran 18 affichera par exemple un menu de plusieurs choix dont l'un d'entre eux sera appelé : "RECONNAISSANCE" ;
   Dans le cas où les deux appareils sont équipés d'un écran et d'un clavier, ils afficheront le même menu. Aussi, dans ce cas, la deuxième étape du procédé consiste à :
(b) sélectionner l'un des deux appareils comme appareil-maître et l'autre comme appareil-esclave. Cette sélection n'a pas de raison d'être dans le cas où seul l'un des deux appareils a un écran d'affichage et un clavier de sélection, auquel cas il est l'appareil-maître.
   Par suite de cette sélection, l'appareil téléphonique 10 se comporte en appareil-maître tandis que l'oreillette d'écoute 12 se comporte en appareil-esclave.
   Cette sélection étant faite, la troisième phase consiste à :
(c) approcher les deux appareils 10 et 12 (figure 2) de manière que leurs antennes 14 et 16 soient à proximité immédiate l'une de l'autre.
   A l'issue de cette étape (c), les appareils n'émettent encore aucun signal radiofréquence.
   La quatrième étape consiste alors à :
(d) lancer sur l'appareil-maître, c'est-à-dire l'appareil téléphonique 10, une procédure automatique de reconnaissance sécurisée en sélectionnant l'option "RECONNAISSANCE" sur le menu proposé sur l'écran 18 via des boutons de sélection 22.
   Ce lancement de la procédure "RECONNAISSANCE" a pour effet de faire réaliser par les deux appareils la procédure classique de connexion au réseau radiofréquence mais avec une différence très importante : l'émetteur de l'appareil-maître émet des signaux radiofréquence selon un diagramme de rayonnement ayant une portée extrêmement faible de manière à ne pouvoir être reçu intelligiblement que par un autre appareil à proximité immédiate telle que l'oreillette d'écoute 12 (figure 2).

Dès que l'appareil-esclave est intégré au réseau radiofréquence par la procédure classique du réseau, l'appareil-maître génère une clé de reconnaissance qui est ensuite utilisée pour sécuriser les échanges ultérieurs d'informations entre l'appareil-maître et l'appareil-esclave.

Lorsque la clé de reconnaissance est connue des deux appareils, le procédé selon l'invention prend fin et cette fin est affichée sur l'écran 18 par un message approprié. L'appareil-maître émet de nouveau selon le diagramme de rayonnement normal correspondant à la portée habituelle. Les deux appareils peuvent alors être éloignés l'un de l'autre et continuer leurs échanges d'informations selon la procédure classique du réseau mais ces échanges sont sécurisés grâce à la clé de reconnaissance.

Si le procédé n'aboutit pas à une reconnaissance, ce défaut est signalé à l'utilisateur par affichage ou tout autre moyen. L'utilisateur peut alors recommencer le procédé à l'étape (b) sans changer d'appareil-maître ou en prenant l'autre appareil comme appareil-maître quand cela est possible.

Si plusieurs appareils-esclaves en marche sont dans le périmètre du diagramme de rayonnement de l'appareil-maître, leur présence sera détectée par l'appareil-maître qui fournira alors un message significatif de cet état, par exemple, "Environnement non sécurisé : plusieurs appareils en présence".

Afin de tenir compte du fait que la portée d'un diagramme de rayonnement dépend de la puissance disponible sur les batteries de l'appareil-maître et de l'appareil-esclave, le procédé de l'invention prévoit plusieurs émissions successives de signaux par l'appareil-maître avec des puissances de plus en plus élevées dans le cas où la procédure de reconnaissance n'aboutit pas avec la puissance plus faible.

Ces émissions à des puissances de plus en plus élevées sont arrêtées dès que la procédure de reconnaissance a abouti.

La mise en oeuvre du procédé selon l'invention implique que l'appareil-maître soit modifié pour pouvoir émettre des signaux selon au moins deux diagrammes de rayonnement, l'un de faible portée pour la reconnaissance et l'autre de portée normale pour le fonctionnement habituel hors reconnaissance. Ceci peut être obtenu en utilisant deux antennes différentes, une pour la reconnaissance selon l'invention et l'autre pour le fonctionnement normal.

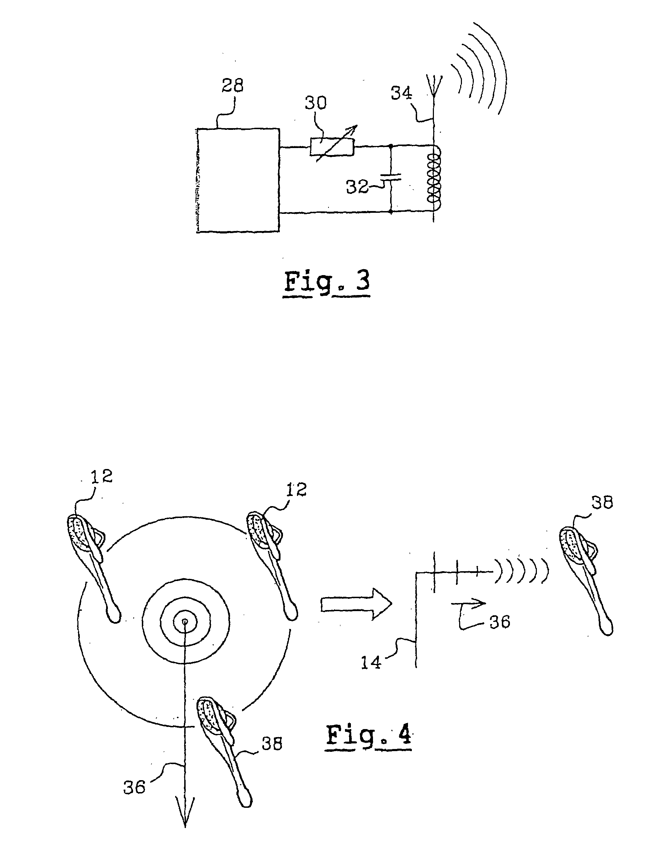

On peut également utiliser une seule antenne dont la puissance fournie par un étage de puissance 28 est modulée, par exemple en modifiant son impédance d'entrée 30 (figure 3) de manière à "désaccorder" le circuit oscillant d'antenne comprenant le condensateur 32 et l'antenne proprement dite 34.

On modifie ensuite l'impédance d'entrée 30 de manière à accorder progressivement le circuit oscillant et atteindre la puissance minimale requise pour que les signaux émis par l'appareil-maître soient captés par l'appareil-esclave.

On peut également modifier la directivité de l'antenne de manière à favoriser un angle d'émission particulier correspondant à la flèche 36. Seul l'appareil-esclave 38 qui est placé suivant cette direction 36 recevra les signaux émis.

Lorsque la liaison sécurisée a été établie entre deux appareils selon le procédé de l'invention, elle peut être interrompue soit volontairement en arrêtant l'un des deux appareils, soit par suite du dépassement de la portée de rayonnement de l'appareil-maître.

Dans les deux cas, la liaison sécurisée ne peut être rétablie qu'en recommençant les étapes du procédé à son point de départ, ce qui implique que la nouvelle liaison est établie avec une autre clé de reconnaissance.

Cependant, il ne sera pas nécessaire de reprendre l'étape (a) de mise en marche de l'appareil qui n'a pas été arrêté en prévoyant un bouton de réinitialisation qui met l'appareil à l'étape (b).

## Revendications

1. Procédé de reconnaissance sécurisée entre deux appareils (10, 12) d'un réseau radiofréquence, **caractérisé en ce qu'**il comprend les étapes suivantes consistant à :
a) mettre en marche les deux appareils (10, 12),
b) sélectionner l'un (10) des deux appareils comme appareil-maître et l'autre (12) comme appareil-esclave,
c) approcher les deux appareils (10, 12) à proximité immédiate l'un de l'autre,
d) lancer sur l'appareil-maître (10) une procédure automatique de reconnaissance sécurisée consistant à :
d1) émettre des signaux selon un diagramme de rayonnement tel que les signaux ne soient reçus que par l'appareil-esclave (12),
d2) lancer une procédure classique de connexion au réseau radiofréquence et, en cas de succès de connexion au réseau radiofréquence,
d3) générer une clé de reconnaissance en vue de sécuriser les échanges ultérieurs,
d4) émettre à nouveau des signaux selon le diagramme de rayonnement habituel, et
e) éloigner les deux appareils (10, 12) l'un de l'autre pour un fonctionnement à distance normale.

2. Procédé selon la revendication 1, **caractérisé en ce que** les étapes d1) et d2) sont répétées en cas d'échec de l'étape d2) de connexion au réseau radiofréquence.

3. Procédé selon la revendication 2, **caractérisé en ce que** les étapes d1) et d2) sont répétées au moins une fois avec un diagramme de rayonnement de portée plus grande.

4. Procédé selon la revendication 3, **caractérisé en ce que** le diagramme de rayonnement de portée plus grande est obtenu en augmentant la puissance appliquée à l'antenne de l'appareil-maître.

5. Procédé selon la revendication 3, **caractérisé en ce que** le diagramme de portée plus grande est obtenu en modifiant l'accord de l'antenne de l'appareil-maître.

6. Procédé selon l'une quelconque des revendications précédentes 1 à 5, **caractérisé en ce que** le diagramme de rayonnement de l'antenne de l'appareil-maître présente une direction privilégiée (36) de rayonnement.

7. Procédé selon l'une quelconque des revendications précédentes 1 à 6, **caractérisé en ce que** l'étape d3) est remplacée par une étape d'3) qui est mise en oeuvre par l'appareil-esclave.

8. Procédé selon l'une quelconque des revendications précédentes 1 à 7, **caractérisé en ce que**, en cas d'échec de l'opération d2) de connexion au réseau radiofréquence, le procédé retourne à l'étape b) en sélectionnant l'appareil-esclave comme appareil-maître.

9. Appareil-maître pour mettre en oeuvre le procédé selon l'une quelconque des revendications prédécentes 1 à 8, et comprenant un émetteur-récepteur connecté à une antenne d'émission-réception (34) de manière à réaliser un dispositif d'émission-réception, **caractérisé en ce que** le dispositif d'émission-réception comprend des moyens pour modifier la portée du diagramme de rayonnement de l'antenne de manière à présenter une première portée correspondant à un fonctionnement normal et au moins une deuxième portée plus petite que la première pour mettre en oeuvre le procédé selon l'invention.

10. Appareil-maître selon la revendication 9, **caractérisé en ce que** les moyens pour modifier la portée du diagramme de rayonnement de l'antenne comprennent des moyens pour modifier la puissance appliquée à l'antenne.

11. Appareil-maître selon la revendication 9, **caractérisé en ce que** les moyens pour modifier la portée du diagramme de rayonnement de l'antenne comprennent des moyens pour modifier l'accord du circuit d'antenne.

12. Appareil-maître selon l'une des revendications précédentes 9 à 11, **caractérisé en ce que** l'antenne d'émission-réception présente une direction privilégiée d'émission (36).

## Patentansprüche

1. Gesichertes Erkennungsverfahren zwischen zwei Geräten (10, 12) eines Funkfrequenznetzes, **dadurch gekennzeichnet, dass** es die folgenden Schritte umfasst:
a) Einschalten der beiden Geräte (10, 12),
b) Wahl eines (10) der beiden Geräte als Master-Gerät und des anderen (12) als Slave-Gerät,
c) Annäherung der beiden Geräte (10, 12) in unmittelbarer Nähe zueinander,
d) Starten auf dem Master-Gerät (10) eines automatischen Verfahrens zur gesicherten Erkennung, wie folgt:
d1) Ausgabe von Signalen nach einer Richtcharakteristik, so dass die Signale nur von dem Slave-Gerät (12) empfangen werden,
d2) Start eines konventionellen Verbindungsverfahrens mit dem Funkfrequenznetz und, bei hergestellter Verbindung mit dem Funkfrequenznetz,
d3) Erzeugen eines Erkennungsschlüssels, um die späteren Austausche zu sichern,
d4) nochmalige Ausgabe von Signalen nach der üblichen Richtcharakteristik, und
e) Entfernung der beiden Geräte (10, 12) voneinander für einen Betrieb aus normaler Distanz.

2. Verfahren nach Anspruch 1, **dadurch gekennzeichnet, dass** die Schritte d1) und d2) wiederholt werden, wenn die Verbindung mit dem Funkfrequenznetz im Schritt d2) nicht hergestellt werden kann.

3. Verfahren nach Anspruch 2, **dadurch gekennzeichnet, dass** die Schritte d1) und d2) mindestens einmal mit der Richtcharakteristik mit der größten Reichweite wiederholt werden.

4. Verfahren nach Anspruch 3, **dadurch gekennzeichnet, dass** die Richtcharakteristik mit der größeren Reichweite durch Erhöhung der an die Antenne des Master-Geräts gelieferten Leistung erzielt wird.

5. Verfahren nach Anspruch 3, **dadurch gekennzeichnet, dass** die Richtcharakteristik mit der größeren Reichweite durch Änderung der Abstimmung der Antenne des Master-Geräts erzielt wird.

6. Verfahren nach einem der vorangehenden Ansprüche 1 bis 5, **dadurch gekennzeichnet, dass** die Richtcharakteristik der Antenne des Master-Geräts eine bevorzugte Ausstrahlungsrichtung (36) aufweist.

7. Verfahren nach einem der vorangehenden Ansprüche 1 bis 6, **dadurch gekennzeichnet, dass** der Schritt d3) durch einen Schritt d'3) ersetzt wird, der von dem Slave-Gerät umgesetzt wird.

8. Verfahren nach einem der vorangehenden Ansprüche 1 bis 7, **dadurch gekennzeichnet, dass** wenn die Verbindungsoperation d2) mit dem Funkfrequenznetz nicht gelingt, das Verfahren zum Schritt b) zurückkehrt, wobei das Slave-Gerät als Master-Gerät gewählt wird.

9. Master-Gerät für die Umsetzung des Verfahrens nach einem der vorangehenden Ansprüche 1 bis 8, mit einem an eine Sende-/Empfangsantenne (34) angeschlossenen Sender-Empfänger zur Herstellung einer Sende-/Empfangsvorrichtung, **dadurch gekennzeichnet, dass** die Sende-/Empfangsvorrichtung Mittel umfasst, um die Reichweite der Richtcharakteristik der Antenne zu ändern, um eine erste, einem normalen Betrieb entsprechende Reichweite und mindestens eine zweite, kleinere Reichweite als die erste aufzuweisen, um das erfindungsgemäße Verfahren umzusetzen.

10. Master-Gerät nach Anspruch 9, **dadurch gekennzeichnet, dass** die Mittel zur Änderung der Reichweite der Richtcharakteristik der Antenne Mittel umfassen, um die an die Antenne gelieferte Leistung zu ändern.

11. Master-Gerät nach Anspruch 9, **dadurch gekennzeichnet, dass** die Mittel zur Änderung der Reichweite der Richtcharakteristik der Antenne Mittel umfassen, um die Abstimmung des Antennenkreises zu ändern.

12. Master-Gerät nach einem der vorangehenden Ansprüche 9 bis 11, **dadurch gekennzeichnet, dass** die Sende-/Empfangsantenne eine bevorzugte Senderichtung (36) aufweist.

## Claims

1. A method of secure recognition between two apparatuses (10, 12) of a radio-frequency network, **characterised in that** it comprises the following steps consisting in:
a) switching on the two apparatuses (10, 12);
b) selecting one (10) of the two apparatuses as the master apparatus and the other (12) as the slave apparatus;
c) moving the two apparatuses (10, 12) closer into immediate proximity to each other;
d) initiating on the master apparatus (10) an automatic secure recognition procedure consisting in:
d1) transmitting signals according to a radiation pattern such that the signals are received only by the slave apparatus (12);
d2) initiating a conventional procedure for connecting to the radio-frequency network and, in the case of successfully connecting to the radio-frequency network,
d3) generating a recognition key with a view to making subsequent exchanges secure;
d4) transmitting signals again according to the usual radiation pattern; and
e) moving the two apparatuses (10, 12) away from each other for normal remote operation.

2. A method according to Claim 1, **characterised in that** the steps d1) and d2) are repeated in the case of failure of the step d2) for connecting to the radio-frequency network.

3. A method according to Claim 2, **characterised in that** the steps d1) and d2) are repeated at least once with a radiation pattern of greater range.

4. A method according to Claim 3, **characterised in that** the radiation pattern of greater range is obtained by increasing the power applied to the antenna of the master apparatus.

5. A method according to Claim 3, **characterised in that** the pattern of greater range is obtained by modifying the tuning of the antenna of the master apparatus.

6. A method according to any one of the preceding Claims 1 to 5, **characterised in that** the radiation pattern of the antenna of the master apparatus has a preferred radiation direction (36).

7. A method according to any one of the preceding Claims 1 to 6, **characterised in that** the step d3) is replaced with a step d'3) which is implemented by the slave apparatus.

8. A method according to any one of the preceding Claims 1 to 7, **characterised in that**, in the case of failure of the operation d2) for connecting to the radio-frequency network, the method returns to the step b) while selecting the slave apparatus as the master apparatus.

9. A master apparatus for implementing the method according to any one of the preceding Claims 1 to 8, and comprising a transmitter/receiver connected to a transmit/receive antenna (34) so as to produce a transmit/receive device, **characterised in that** the transmit/receive device comprises means for modifying the range of the radiation pattern of the antenna so as to have a first range corresponding to normal operation and at least one second range smaller than the first for implementing the method according to the invention.

10. A master apparatus according to Claim 9, **characterised in that** the means for modifying the range of the radiation pattern of the antenna comprise means for modifying the power applied to the antenna.

11. A master apparatus according to Claim 9, **characterised in that** the means for modifying the range of the radiation pattern of the antenna comprise means for modifying the tuning of the antenna circuit.

12. A master apparatus according to one of the preceding Claims 9 to 11, **characterised in that** the transmit/receive antenna has a preferred transmit direction (36).
